# EUROPEAN PATENT APPLICATION

(11) **EP 4 509 386 A1**
(43) Date of publication of application: **19.02.2025**
(21) Application number: 24382366.3
(22) Date of filing: 09.04.2024
(51) Int. Cl.: B62B 1/20, B62B 5/00, B07B 1/30, B07B 1/46

(54) **WHEELBARROW WITH SIEVE**

(30) Priority: 17.08.2023 ES 202331503 U
(71) Applicant: Juan Ariza, S.L., 17200 Palafrugell (Girona) (ES)
(72) Inventor: Ariza Colmenero, Juan, Palafrugell (Girona) (ES)
(74) Representative: Pons

(57) **Abstract**

The present invention relates to a wheelbarrow equipped with a frame (4), wheel (2), tray (1) and legs (3), which incorporates a sieve (6) to filter different materials to be transported, such as sand, cereals, soil, grain, or the like. It incorporates a support (7) made up of a ring (11) and rods (12) solidly attached to the ring (11), which are assembled on the tray (1), as well as incorporating a motor (8) solidly fixed to the tray (1). The sieve (6) has a cylindrical configuration which comprises a sieve (13) and a rim (14) that is nested in the ring (11) of the support (7), and the motor (8) has the function of providing vibration to the sieve (6).

## Description

### OBJECT OF THE INVENTION

The present invention relates to a wheelbarrow that incorporates a sieve for filtering different materials, such as sand, cereals, soil, grain or the like, which it is intended for transport.

### BACKGROUND OF THE INVENTION

The wheelbarrow is a long-known method of transporting material. The original format has changed little since its creation. However, additional elements have been incorporated into the original design that have positioned it in differentiated sectors depending on the requirements for which it was created.

Document ES-0275612_U discloses a wheelbarrow where the improvement introduced with respect to those already known consisted of the chassis, configured by a tubular profile bent in a U shape having slightly divergent branches, with a series of transversal breaks that determine a front portion, for the location of the wheel, an intermediate portion, on which the loading tray rests and is fixed, and a rear portion, constituted by the end sections of the lateral branches, which serve as handles for driving the wheelbarrow.

Document ES-1023535_U relates to a wheelbarrow especially designed for transporting cylindrical containers, especially beer barrels. The wheelbarrow is made up of a rigid metal structure defined by a transversal bar that joins two wheels and from which a longitudinal bar emerges perpendicularly that ends in a handle and from which two U-shaped supports emerge for supporting the barrels.

Document ES-0077825_U shows a way to incorporate different elements into the wheelbarrow. In this way, ease of transport is combined with the particular characteristic of the element being housed. In particular, this document describes a wheelbarrow that includes a ladder, so that a ladder is achieved that is very easy to handle and transport, being able to access heights located in different places quickly and easily.

### DESCRIPTION OF THE INVENTION

In order to achieve the objectives and avoid the drawbacks mentioned above, the present invention describes a wheelbarrow with sieve comprising a frame on which a wheel, a tray and legs are fixed.

The wheelbarrow also comprises a support, made up of a ring and rods solidly attached to the ring; a motor, solidly fixed to the tray; a battery, solidly fixed to the frame; a switch, connected to the battery and the motor by means of wiring; and a sieve having cylindrical configuration comprising a base, closed by a screen, and another open base that has a rim (14).

The rim has an outer diameter larger than the inner diameter of the ring, so that the sieve can be nested in the ring of the support. In addition, the support is fixed to the tray along the perimeter.

The fixation of the support to the tray is reversible, preferably using screws or clips.

Regarding the location of the elements, the motor is located in an area to be selected between the front area and the rear area of the wheelbarrow, in an area that does not get in the way. For its part, the battery is located under the tray in the area enabled between the legs, preferably close to the wheel, to try to make its weight as inconspicuous as possible. Finally, the switch is fixed to the frame in an area between the tray and one of the handles, so that it is easy to access for the user of the wheelbarrow.

### DESCRIPTION OF THE DRAWINGS

To complete the description of the invention, and for the purpose of helping to make the features thereof more readily understandable, according to a preferred exemplary embodiment thereof, a set of drawings is included wherein, by way of illustration and not limitation, the following figures have been represented:
- Figure 1 represents a perspective view of the wheelbarrow of the invention with the support attached, in addition to the motor, the battery and a switch, and with the sieve disassembled before being placed on the support.

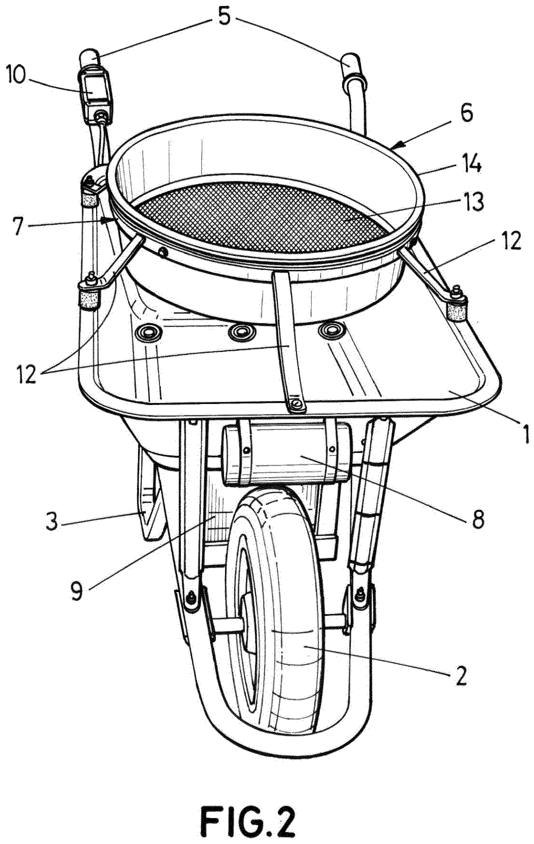

- Figure 2 represents a perspective view of the wheelbarrow of Figure 1 with the sieve assembled.

A list of the references used in the figures is provided below:
1. Tray.
2. Wheel.
3. Legs.
4. Frame.
5. Handles.
6. Sieve.
7. Support.
8. Motor.
9. Battery.
10. Switch.
11. Ring.
12. Rods.
13. Screen.
14. Rim.

### PREFERRED EMBODIMENT OF THE INVENTION

The present invention relates to a wheelbarrow which incorporates a sieve (6) with the objective of transporting material that can be sieved, such as sand, cereals, soil, grain or the like, already sieved, without unnecessary impurities.

The wheelbarrow is one of those known in the sector. It consists of a tray (1) intended to receive the material to be transported, a wheel (2), a pair of legs (3) and a frame (4) which comprises two handles (5) to be grabbed by a user and thus drive the wheelbarrow. The tray (1), the wheel (2) and the legs (3) are fixed to the frame (4).

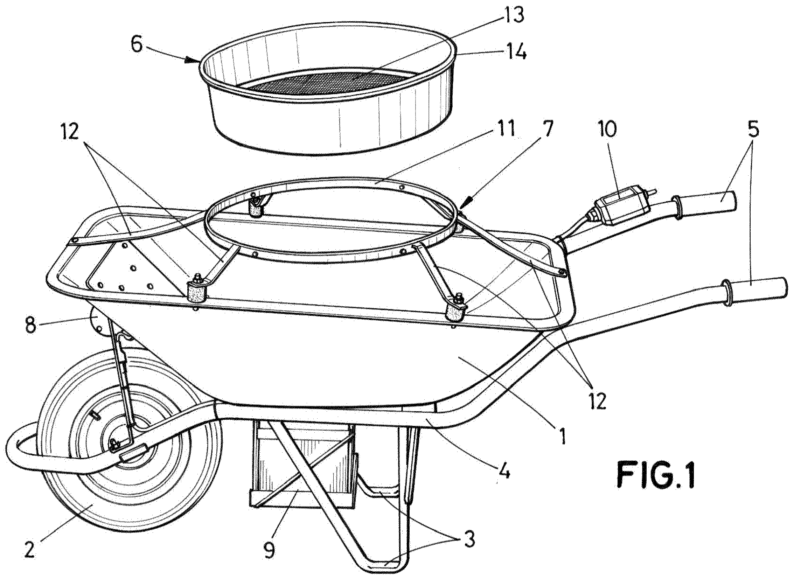

As shown in Figure 1, the wheelbarrow incorporates a sieve (6), fixed to the tray (1) by means of a support (7), a motor (8), fixed to the tray (1) in the front area, a battery (9), fixed to the wheelbarrow in the gap provided by the legs (3) in the central area, and a switch (10), located on one of the bars of the frame (4) in the vicinity of one of the handles (5).

The support (7) is made up of a ring (11) and rods (12).

The ring (11) has a diameter similar to that of the sieve (6), which can be placed stably on top of the same as described below.

The rods (12) are each fixed along the ring (11) at one end and to the perimeter of the tray (1) at the other end, so that the support (7) is solidly attached to the wheelbarrow. Furthermore, the rods (12) are fixed so that the ring (11) is in a higher position than the perimeter edge of the tray (1), so that it does not eliminate the storage area. Moreover, the fixation of the support (7) to the tray (1) is reversible and easy, using screws or clips, for example, so that it can be quickly removed.

The sieve (6) has a cylindrical configuration where one of the bases is closed by the sieve (13) and the other base is open and has a rim (14) that protrudes externally, having a larger diameter. The rim (14) is the part of the sieve (6) that is fixed to the ring (11) when the sieve (6) is inserted into the support (7).

The sieve (6) has a configuration intended to be easy to replace on the support (7), so that sieves (6) can be nested with screens (13) having different densities in order to thus focus the sieving on materials having different granulometry.

For its part, the motor (8) has the function of providing vibration to the sieve (6). For this, the motor (8) is fixed to the tray (1) and is electrically connected to both the battery (9) and the switch (10).

The battery (9) is located under the tray (1), in the gap left by the legs (3). For its part, the switch (10) is fixed on one of the bars of the frame (4), in the vicinity of the handle (5), in an area outside the tray (1) and at a height, so that it is easily accessible to the user of the wheelbarrow.

With this configuration, a user can activate the switch (10) to start up the motor (8) and make the sieve (6) vibrate to subsequently shovel the material to be sieved (sand, grain, soil, cereals, etc.) on same and fill the tray (1) with the already sieved material. Subsequently, a user only has to remove the sieve (6) from the support (7) to transport the sand.

## Claims

1. A wheelbarrow with sieve comprising a frame (4) on which a wheel (2), a tray (1) and legs (3) are fixed, **characterised in that** it comprises:
- a support (7) configured by a ring (11) and rods (12) solidly attached to the ring (11),
- a motor (8) solidly fixed to the tray (1),
- a battery (9), solidly fixed to the frame (4),
- a switch (10) connected to the battery (9) and to the motor (8) by means of wiring, and
- a sieve (6) having cylindrical configuration which comprises a screen (13) on a base and another open base where the edge has a rim (14),
wherein
- the rim (14) has an outer diameter larger than the inner diameter of the ring (11), so that the sieve can be nested in the ring (11) of the support (7), and
- the support (7) is fixed to the tray (1) along the perimeter.

2. The wheelbarrow of claim 1, wherein the fixation of the support (7) to the tray (1) is reversible.

3. The wheelbarrow of claim 1, wherein the motor (8) is located in an area to be selected between the front area and the rear area of the wheelbarrow.

4. The wheelbarrow of claim 1, wherein the battery (9) is located under the tray (1) in the area enabled between the legs (3).

5. The wheelbarrow of claim 1, wherein the switch (10) is fixed to the frame (4) in an area between the tray (1) and one of the handles (5).
